# EUROPÄISCHE PATENTSCHRIFT

(11) **EP 1 420 001 B1**
(45) Veröffentlichungstag und Bekanntmachung des Hinweises auf die Patenterteilung: **30.03.2005**
(21) Anmeldenummer: 03025497.3
(22) Anmeldetag: 06.11.2003
(51) Int. Cl.: C04B 28/00

(54) **In Wasser redispergierbare Polymerpulver-Zusammensetzungen mit abbindebeschleunigender Wirkung**
Set accelerating redispersible powder composition
Composition en poudres redispersables accélérant la prise du ciment

(30) Priorität: 14.11.2002 DE 10253045
(43) Veröffentlichungstag der Anmeldung: 19.05.2004
(73) Patentinhaber: Wacker Polymer Systems GmbH & Co. KG, 84489 Burghausen (DE)
(72) Erfinder: Weitzel, Hans-Peter, Dr., 84571 Reischach (DE)
(74) Vertreter: Schuderer, Michael, Dr.

(56) Entgegenhaltungen:
- EP-A- 0 723 975
- EP-A- 0 894 822
- EP-A- 1 136 507
- WO-A-97/15616
- WO-A-97/15617
- DE-A- 19 751 512

## Beschreibung

Die Erfindung betrifft in Wasser redispergierbare Polymerpulver-Zusammensetzungen mit abbindebeschleunigender Wirkung, Verfahren zu deren Herstellung, und die Verwendung dieser Pulver in hydraulisch abbindenden Systemen.

Polymerisate auf Basis von Vinylester, Vinylchlorid, (Meth)-acrylatmonomeren, Styrol, Butadien und Ethylen werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate eingesetzt. Zur Stabilisierung dieser Polymerisate werden Schutzkolloide oder niedermolekulare oberflächenaktive Verbindungen eingesetzt. Als Schutzkolloide werden in der Regel Polyvinylalkohole eingesetzt.

Diese Produkte finden insbesondere Verwendung als Bindemittel in hydraulisch abbindenden Klebstoffen wie in Fliesenklebern auf Basis von Zementen oder Gipsen.

Der Werkstoff Beton ist ein sehr vielseitiger Werkstoff dessen Eigenschaften durch eine Vielzahl von Parametern gesteuert werden können. Wichtige Eigenschaften sind unter anderem die Verarbeitbarkeit über die Zeit und die Festigkeit (Früh- und Endfestigkeit) des Betons. Durch die ablaufende Hydratation der Masse nimmt die Verarbeitbarkeit mit der Zeit ab. Um diesem Effekt entgegenzusteuern kann entweder mehr Wasser oder sogenannter Verflüssiger bzw. Superplasticizer zugesetzt werden. Beides führt aber dazu, dass Anfangs- und Endfestigkeit des Betons nachteilig beeinflusst werden. Um diese Nachteile zu kompensieren werden sogenannte Beschleuniger oder Frühfestigkeitsentwickler zugesetzt, die zu einer höheren Anfangs- und Endfestigkeit führen.

In der EP-A 1136507 werden tertiäre Alkanolamine als dem Fachmann schon lange bekannte Beschleuniger beschrieben. Nachteilig ist, dass diese Verbindungen sehr aktive Nukleophile sind und daher die Estergruppen im meist eingesetzten kunststoffhaltigen Bindemittel, auf Basis von Vinylacetat-Ethylen- oder Styrol-Acrylsäureester-Mischpolymerisaten, verseifen und die Wirksamkeit der Bindemittel zerstören. In der EP- A 1136507 werden die Alkanolamine daher aufwendig an ein Polymerrückgrat angebunden.

Die EP-A 1167317 betrifft wasserlösliche, fluoridhaltige oder sulfathaltige Aluminiumsalze als Abbinde- und Erhärtungsbeschleuniger beschrieben.

In der EP-A 894822 werden Dispersionspulver auf Basis von vernetzbaren Polymerisaten mit Aldehyd-, Keto-, Epoxid-, Isocyanat-, Carbonsäureanhydrid- und Aziridin-Gruppen beschrieben, welche unter anderem mit in Salzform vorliegenden Polyoxyalkylenaminen vernetzt werden können. Salzförmige Polyoxyalkylenamine sind in der vorliegenden Anmeldung als Beschleuniger in der Pulverzusammensetzung enthalten. Der Gegenstand der Anmeldung erstreckt sich folglich nicht auf Polymerisate mit Aldehyd-, Keto-, Epoxid-, Isocyanat-, Carbonsäureanhydrid- und Aziridin-Gruppen.

Aufgabe der Erfindung war es daher, eine Lösung bereitzustellen wie der Einsatz von Beschleunigern auf Alkanolaminbasis ohne aufwendige Polymersynthese und ohne Beeinträchtigung der anderen Komponenten im Beton gewährleistet werden kann.

Die Aufgabe wird dadurch gelöst, dass der Beschleuniger als Bestandteil einer Redispersionspulver-Zusammensetzung eingesetzt wird. Überraschenderweise zeigt sich hierbei, dass trotz der Beinhaltung großer Mengen an niedermolekularen organischen Verbindungen, die Eigenschaften des Redispersionspulvers wie Blockstabilität und Rieselfähigkeit nicht beeinträchtigt werden.

Gegenstand der Erfindung sind in Wasser redispergierbare Polymerpulver-Zusammensetzungen mit abbindebeschleunigender Wirkung auf der Basis von Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, welche keine Substituenten aus der Gruppe umfassend Aldehyd-, Keto-, Epoxid-, Isocyanat-, Carbonsäureanhydrid- und Aziridin-Gruppen enthalten, einem oder mehreren Schutzkolloiden, gegebenenfalls Antiblockmittel, dadurch gekennzeichnet, dass ein oder mehrere Verbindungen NR₃ oder R₂N-(CH₂)ₙ-NR₂ mit n = 1 bis 4 enthalten sind, wobei die Reste R gleich oder verschieden sind, und die Bedeutung Wasserstoff, C₁- bis C₆-Alkylrest und C₁- bis C₆-Hydroxyalkylrest haben, wobei mindestens ein Rest R ein C₁- bis C₆-Hydroxyalkylrest ist, oder ein oder mehrere einfach oder zweifach NH₂-terminierte Polyalkylenglykole mit C₁- bis C₆-Alkylengruppe enthalten sind, und die Verbindungen NR₃, R₂N-(CH₂)ₙ-NR₂ sowie die NH₂-terminierten Polyalkylenglykole auch in Form deren Salze vorliegen können.

Bevorzugte einfach oder zweifach NH₂-terminierte Polyalkylenglykole sind einfach oder zweifach aminoterminierte Polyethylenglykole (PEO), einfach oder zweifach aminoterminierte Polypropylenglykole (PPO), sowie einfach oder zweifach aminoterminierte EO-PO-Mischpolymerisate. Bevorzugte Verbindungen R₂N-(CH₂)ₙ-NR₂ enthalten ein bis vier Ethanolamin-, Propanolamin- oder Isopropanolamin-Reste sowie Wasserstoff-, Methyl-, Ethyl- und Propylreste und es gilt n = 2. Besonders bevorzugt wird N,N,N',N'-Tetrakis-(2-hydroxypropyl)-ethylendiamin. Bevorzugte Verbindungen NR₃ enthalten ein bis drei Ethanolamin- oder Isopropanolamin-Reste sowie Wasserstoff-, Methyl-, Ethyl- und Propylreste. Bevorzugt sind Ethanolamin, Diethanolamin, Triethanolamin, N-Methyl-Diethanolamin, Triisopropanolamin, N,N-Dimethylethanolamin. Besonders bevorzugt werden Triisopropanolamin, Diethanolamin, Triethanolamin, und N-Methyldiethanolamin eingesetzt. Im allgemeinen wird die abbindebeschleunigende Komponente in einer Menge von 0.1 bis 25 Gew.-%, vorzugsweise 1 bis 10 Gew.-%, jeweils bezogen auf das Gesamtgewicht der Pulver-Zusammensetzung eingesetzt. Die genannten abbindebeschleunigenden Verbindungen können auch in Form deren Salze von anorganischen oder vorzugsweise organischen Säuren eingesetzt werden. Besonders bevorzugt werden dabei die Salze von Ameisensäure und Essigsäure.

Für das Basispolymerisat geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Shell). Besonders bevorzugt ist Vinylacetat.

Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0.05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- Gruppen, beispielsweise Methacrylsäure- und Acrylsäurehydroxyalkylester wie Hydroxyethyl-, Hydroxypropyl- oder Hydroxybutylacrylat oder -methacrylat.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate;
Mischpolymerisate von Vinylacetat mit 1 bis 40 Gew.-% Ethylen;
Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11;
Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
Mischpolymerisate mit Vinylacetat, 1 bis 40 Gew.-% Ethylen und 1 bis 60 Gew.-% Vinylchlorid; wobei
die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat;
Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat;
Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen;
Styrol-1,3-Butadien-Copolymerisate;
wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, daß im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.001 bis 0.02 Gew.-%, vorzugsweise 0.001 bis 0.01 Gew.-%, jeweils bezogen auf das Gesamtgewicht der Monomere, eingesetzt.

Als Redox-Initiatoren verwendet man Kombinationen aus den genannten Initiatoren mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0.001 bis 0.03 Gew.-%, vorzugsweise 0.001 bis 0.015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Geeignete Schutzkolloide sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich und werden im allgemeinen in einer Menge von insgesamt 1 bis 20 Gew.-%, bezogen auf das Gesamtgewicht der Monomere, bei der Polymerisation zugesetzt.

Wird in Gegenwart von Emulgatoren polymerisiert, beträgt deren Menge 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Nach Abschluß der Polymerisation kann zur Restmonomerentfernung in Anwendung bekannter Methoden nachpolymerisiert werden, im allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben einen Feststoffgehalt von 30 bis 75 Gew.-%, vorzugsweise von 50 bis 60 Gew.-%.

Zur Herstellung der in Wasser redispergierbaren Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zweioder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe (Schutzkolloid) in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll 3 bis 30 Gew.-%, bezogen auf den Polymeranteil betragen; bevorzugt werden 5 bis 20 Gew.-%, bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, daß ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Zur Herstellung der Polymerpulver-Zusammensetzung wird die abbindebeschleunigende Komponente unmittelbar vor der Sprühtrocknung zur entsprechenden Polymerdispersion zugegeben, um die Zeit für Verseifungsprozesse möglichst kurz zu halten. Bei Verwendung der abbindebeschleunigenden Komponente in Salzform wird das Amin oder das aminoterminierte Polyalkylenglykol zuvor mit einer Säure neutralisiert und in Salzform mit der Dispersion zum Pulver coverdüst. Gegegebenenfalls kann die abbindebeschleunigende Komponente auch nach der Trocknung in Pulverform zugegeben werden. Dazu wird diese auf ein pulverförmiges Trägermaterial, beispielsweise Kieselsäure, aufgezogen.

Die in Wasser redispergierbaren Polymerpulver-Zusammensetzungen können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Bevorzugte Anwendungsgebiete sind Spritzmörtel und Spritzbeton für Bauwerke des Hoch- und Tiefbaues sowie der Auskleidung von Tunnelwänden.

Der Vorteil der redispergierbaren Polymerpulver-Zusammensetzung beruht auf der Tatsache, dass in dieser festen Darreichungsform keine Verseifungsreaktionen mehr ablaufen können und somit das Bindemittel nicht beeinflusst wird. Weiterer Vorteil ist die Tatsache, dass der Verarbeiter an der Baustelle eine Komponente weniger handhaben muss und die Handhabung in fester Darreichungsform leichter ist als der Umgang mit flüssigen organischen, brennbaren Verbindungen wie sie Alkanolamine darstellen.

### Beispiele:

### Polymerdispersion:

Als Dispersion wurde eine polyvinylalkoholstabilisierte Dispersion eines Copolymeren aus Vinylacetat und Ethylen verwendet. Die Herstellung erfolgte mittels Emulsionspolymerisation. Zur Stabilisierung wurden 10 Gew.-% eines Polyvinylalkoholes mit einem Verseifungsgrad von 88 Mol-% und einer Viskosität nach Höppler von 4 mPas verwendet. Die Copolymerzusammensetzung betrug 92 Gew.-% Vinylacetat und 8 Gew.-% Ethylen.

### Redispersionspulver:

Die Pulver wurden durch Sprühtrocknung der genannten Dispersion unter Zusatz des Beschleunigers und 8 Gew.-% eines Polyvinylalkoholes mit einem Verseifungsgrad von 88 Mol-% und einer Viskosität nach Höppler von 4 mPas hergestellt.
Die Dispersion wurde dann mittels Zweistoffdüse versprüht. Als Verdüsungskomponente diente auf 4 bar vorgepresste Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Gemisch aus Calcium-Magnesium-Carbonat und Magnesiumhydrosilikat) versetzt.

### Beschleuniger:

Die Alkanolamine wurden entweder direkt eingesetzt oder zuvor mit der äquimolaren Menge an Ameisensäure (FA) versetzt bzw. auf einen pH-Wert von 5 bis 6 eingestellt. Es wurden folgende Alkanolamine verwendet:
- MDEA =: N-Methyldiethanolamin
- TEA =: Triethanolamin
- DEA =: Diethanolamin
- TPA =: Triisopropanolamin

### Ausprüfung:

Die erhaltenen Pulver wurden auf ihre Pulvereigenschaften und auf die Wirksamkeit des Beschleunigers im Beton überprüft.

### Rieselfähigkeit:

Die Rieselfähigkeit wurde optisch über die Ausbildung des Schüttkegels beurteilt.

### Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
- 1 - 3 =: sehr gute Blockstabilität
- 4 - 6 =: gute Blockstabilität
- 7 - 8 =: befriedigende Blockstabilität
- 9 - 10 =: nicht blockstabil, Pulver nach Zerdrücken nicht mehr rieselfähig.

### Bestimmung des Absitzverhaltens RA:

Das Absitzverhalten der Redispersion dient als Maß für die Redispergierbarkeit der Pulvers. Die Redispersionen wurden 50 Gew.-%- ig in Wasser durch Einwirkung von starken Scherkräften erzeugt.
Das Absitzverhalten wurde dann an verdünnten Redispersionen (0.5 % Festgehalt) bestimmt, und dazu 100 ml dieser Dispersion in eine graduierte Röhre gefüllt, und die Absitzhöhe an Feststoff gemessen. Die Angabe erfolgt in mm Absitz nach 24 Stunden. Werte größer 7 zeigen eine unzureichende Redispersion des Pulvers an.

### Bestimmung des Abbindeverhaltens (Thermokurve):

Das Abbindeverhalten des zementären System bei Einsatz der Pulver wurde durch Verfolgung der Hydratationswärme bestimmt. Die Messung erfolgte bei einem Kunststoffzementfaktor von 0.1 und einem Wasserzementfaktor von 0.4. Für die Messung wurde Zement der Klasse CEM I 42,5R der Firma Rohrdorf eingesetzt. Messgröße ist die Temperatur der Masse, die mittels einer Messsonde bestimmt wird. Angegeben ist die Zeit bis zum Erreichen der max. Temperatur.

Die Testergebnisse sind in Tabelle 1 zusammengefaßt.

Aus den Daten ist zu erkennen, dass die Pulvereigenschaften nicht negativ beeinflusst werden. Rieselfähigkeit, Blockstabilität und Redispergierbarkeit bleiben im wesentlichen unverändert. Die postive Auswirkung auf das Zementabbinden hingegen ist deutlich sichtbar. Die Massen zeigen, wie gefordert, eine deutlich beschleunigte Temperaturentwicklung.

**Tabelle 1:**

| **Beispiel** | **Beschleuniger** | **Menge (Gew.%)** | **Riesel- fähigkeit** | **Block- note** | **RA (24 h)** | **T max (min)** |
|---|---|---|---|---|---|---|
| 1 | MDEA | 10 | gut | 4.0 | 5.8 | 20 |
| 2 | TEA | 10 | gut | 5.0 | 5.4 | 17 |
| 3 | DEA | 10 | gut | 4.5 | 4.3 | 25 |
| 4 | TPA | 10 | gut | 5.0 | 4.9 | 23 |
| 5 | MDEA | 5 | gut | 5.0 | 6.3 | 24 |
| 6 | TEA | 5 | gut | 5.5 | 5.8 | 18 |
| 7 | DEA | 5 | gut | 4.0 | 6.7 | 27 |
| 8 | TPA | 5 | gut | 6.0 | 6.2 | 28 |
| 9 | MDEA +FA | 10 | gut | 4.5 | 1.6 | 26 |
| 10 | TEA + FA | 10 | gut | 4.5 | 3.0 | 22 |
| 11 | DEA + FA | 10 | gut | 4.5 | 1.6 | 28 |
| 12 | TPA + FA | 10 | gut | 5.0 | 5.0 | 24 |
| 13 | MDEA + FA | 5 | gut | 4.0 | 1.6 | 25 |
| 14 | TEA + FA | 5 | gut | 4.0 | 3.4 | 26 |
| 15 | DEA + FA | 5 | gut | 5.0 | 0.8 | 30 |
| 16 | TPA + FA | 5 | gut | 4.0 | 6.3 | 29 |
| 17 | ohne | 0 | gut | 4.0 | 2.5 | 420 |

## Patentansprüche

1. In Wasser redispergierbare Polymerpulver-Zusammensetzungen mit abbindebeschleunigender Wirkung auf der Basis von Homo- oder Mischpolymerisaten von einem oder mehreren _{M}onomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, welche keine Substituenten aus der Gruppe umfassend Aldehyd-, Keto-, Epoxid-, Isocyanat-, Carbonsäureanhydrid- und Aziridin-Gruppen enthalten, einem oder mehreren Schutzkolloiden, gegebenenfalls Antiblockmittel, **dadurch gekennzeichnet, dass** ein oder mehrere Verbindungen NR₃ oder R₂N-(CH₂)ₙ-NR₂ mit n = 1 bis 4 enthalten sind, wobei die Reste R gleich oder verschieden sind, und die Bedeutung Wasserstoff, C₁-bis C₆-Alkylrest und C₁- bis C₆-Hydroxyalkylrest haben, wobei mindestens ein Rest R ein C₁- bis C₆-Hydroxyalkylrest ist, oder ein oder mehrere einfach oder zweifach NH₂terminierte Polyalkylenglykole mit C₁- bis C₆-Alkylengruppe enthalten sind, und die Verbindungen NR₃, R₂N-(CH₂)ₙ-NR₂ sowie die NH₂-terminierten Polyalkylenglykole auch in Form deren Salze vorliegen können.

2. In Wasser redispergierbare Polymerpulver-Zusammensetzungen nach Anspruch 1, **dadurch gekennzeichnet, dass**
die Verbindungen NR₃ ein bis drei Ethanolamin- oder Isopropanolamin-Reste sowie Wasserstoff-, Methyl-, Ethyl- und Propylreste enthalten,
die Verbindungen R₂N-(CH₂)ₙ-NR₂ ein bis vier Ethanolamin-, Propanolamin- oder Isopropanolamin-Reste sowie Wasserstoff-, Methyl-, Ethyl- und Propylreste enthalten und n = 2 und
die NH₂-terminierten Polyalkylenglykole einfach oder zweifach aminoterminierte Polyethylenglykole (PEO), einfach oder zweifach aminoterminierte Polypropylenglykole (PPO), sowie einfach oder zweifach aminoterminierte EO-PO-Mischpolymerisate sind.

3. In Wasser redispergierbare Polymerpulver-Zusammensetzungen nach Anspruch 1 oder 2, **dadurch gekennzeichnet, dass** die abbindebeschleunigende Verbindungen in Form deren Salze von anorganischen oder organischen Säuren eingesetzt werden.

4. In Wasser redispergierbare Polymerpulver-Zusammensetzungen nach Anspruch 1 bis 3, **dadurch gekennzeichnet, dass** als Homo- oder Mischpolymerisate Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate, eingesetzt werden.

5. In Wasser redispergierbare Polymerpulver-Zusammensetzungen nach Anspruch 1 bis 4, **dadurch gekennzeichnet, dass** als Schutzkolloid teilverseifte oder vollverseifte, gegebenenfalls hydrophob modifizierte, Polyvinylalkohole mit einem Hydrolysegrad von 80 bis 100 Mol% und einer Höpplerviskosität, in 4 %-iger wässriger Lösung von 1 bis 30 mPas (Methode nach Höppler bei 20°C, DIN 53015), eingesetzt werden.

6. In Wasser redispergierbare Polymerpulver-Zusammensetzungen nach Anspruch 1 bis 5, **dadurch gekennzeichnet, dass** die abbindebeschleunigende Komponente in einer Menge von 0.1 bis 25 Gew.-%, bezogen auf das Gesamtgewicht der Pulver-Zusammensetzung, enthalten ist.

7. Verfahren zur Herstellung der in Wasser redispergierbaren Polymerpulver-Zusammensetzungen nach Anspruch 1 bis 6, **dadurch gekennzeichnet, dass** die abbindebeschleunigende Komponente unmittelbar vor der Sprühtrocknung zur entsprechenden Polymerdispersion zugegeben wird oder in Salzform mit der Polymerdispersion zum Pulver coverdüst wird, oder nach der Trocknung in Pulverform zugegeben wird.

8. Verwendung der in Wasser redispergierbaren Polymerpulver-Zusammensetzungen nach Anspruch 1 bis 6 in bauchemischen Produkten, in Verbindung mit hydraulisch abbindenden Bindemitteln wie Zementen, Gips und Wasserglas.

9. Verwendung der in Wasser redispergierbaren Polymerpulver-Zusammensetzungen nach Anspruch 1 bis 6 für die Herstellung von Baukleber, Fliesenkleber und Vollwärmeschutzkleber, Putzen, Spachtelmassen, Fußbodenspachtelmassen, Verlaufsmassen, Dichtschlämmen, Fugenmörtel und Farben.

10. Verwendung der in Wasser redispergierbaren Polymerpulver-Zusammensetzungen nach Anspruch 1 bis 6 für Spritzmörtel und Spritzbeton für Bauwerke des Hoch- und Tiefbaues sowie der Auskleidung von Tunnelwänden.

## Claims

1. Water-redispersible polymer powder composition with accelerated-setting action based on homo- or copolymers of one or more monomers from the group consisting of vinyl esters of unbranched or branched alkylcarboxylic acids having from 1 to 15 carbon atoms, methacrylic esters and acrylic esters of alcohols having from 1 to 15 carbon atoms, vinylaromatics, olefins, dienes, and vinyl halides which do not contain any substituent from the group consisting of aldehyde, keto, epoxy, isocyanate, carboxylic anhydride and aziridine groups, and on one or more protective colloids, and, where appropriate, antiblocking agent, **characterized in that** one or more compounds NR₃ or R₂N-(CH₂)ₙ-NR₂ are present, where n = from 1 to 4, and where the radicals R are identical or different, and are hydrogen, a C₁-C₆-alkyl radical, or a C₁-C₆-hydroxyalkyl radical, where at least one radical R is a C₁-C₆-hydroxyalkyl radical, or one or more singly or doubly NH₂-terminated polyalkylene glycols having a C₁-C₆-alkylene group is/are present, and the compounds NR₃, R₂N-(CH₂)ₙ-NR₂, and also the NH₂-terminated polyalkylene glycols, may also be present in the form of their salts.

2. Water-redispersible polymer powder composition according to Claim 1, **characterized in that** the compounds NR₃ contain from one to three ethanolamine radicals or isopropanolamine radicals, or else hydrogen radicals, methyl radicals, ethyl radicals, or propyl radicals,
the compounds R₂N-(CH₂)ₙ-NR₂ contain from one to four ethanolamine radicals, propanolamine radicals or isopropanolamine radicals, or else hydrogen radicals, methyl radicals, ethyl radicals, or propyl radicals, and
n = 2, and
the NH₂-terminated polyalkylene glycols are singly or doubly amino-terminated polyethylene glycols (PEOs), singly or doubly amino-terminated polypropylene glycols (PPOs), or else singly or doubly amino-terminated EO-PO copolymers.

3. Water-redispersible polymer powder composition according to Claim 1 or 2, **characterized in that** the setting-accelerator compounds are used in the form of their salts of inorganic or organic acids.

4. Water-redispersible polymer powder composition according to any of Claims 1 to 3, **characterized in that** the homo- or copolymers used comprise vinyl acetate homopolymers, copolymers of vinyl acetate with ethylene, copolymers of vinyl acetate with ethylene and with one or more other vinyl esters, copolymers of vinyl acetate with ethylene and acrylic ester, copolymers of vinyl acetate with ethylene and vinyl chloride, styrene-acrylic ester copolymers, styrene-1,3-butadiene copolymers.

5. Water-redispersible polymer powder composition according to any of Claims 1 to 4, **characterized in that** the protective colloid used comprises partially hydrolysed or fully hydrolysed, where appropriate hydrophobicized, polyvinyl alcohols having a degree of hydrolysis of from 80 to 100 mol% and having a Höppler viscosity of from 1 to 30 mPas in 4% strength aqueous solution (Höppler method at 20°C, DIN 53015).

6. Water-redispersible polymer powder composition according to any of Claims 1 to 5, **characterized in that** the amount present of the setting-accelerator component, based on the total weight of the powder composition, is from 0.1 to 25% by weight.

7. Process for preparing the water-redispersible polymer powder compositions according to any of Claims 1 to 6, **characterized in that** it comprises adding the setting-accelerator component to the appropriate polymer dispersion immediately prior to the spray drying process, or spraying the setting-acelerator component in salt form together with the polymer dispersion to give the powder, or adding the setting-accelerator component after the drying process in powder form.

8. Use of the water-redispersible polymer powder compositions according to any of Claims 1 to 6 in construction chemistry products, in association with hydraulically setting binders, such as cements, calcium sulphate, and water glass.

9. Use of the water-redispersible polymer powder compositions according to any of Claims 1 to 6 for the production of construction adhesives, tile adhesive, exterior insulation system adhesive, plasters and renders, trowelling compositions, floor-filling compositions, self-levelling compositions, sealing slurries, jointing mortars, or paints.

10. Use of the water-redispersible polymer powder compositions according to any of Claims 1 to 6 for spray mortar or spray concrete for construction work in civil or structural engineering, or else in the lining of tunnel walls.

## Revendications

1. Compositions de poudres de polymères redispersables dans l'eau, à effet accélérateur de prise, à base d'homopolymères ou de copolymères d'un ou plusieurs monomères choisis dans le groupe comprenant des esters vinyliques d'acides alkylcarboxyliques ramifiés ou non ramifiés ayant de 1 à 15 atomes de carbone, des esters d'acide méthacrylique et esters d'acide acrylique avec des alcools ayant de 1 à 15 atomes de carbone, des composés vinylaromatiques, des oléfines, des diènes et des halogénures de vinyle, qui ne comportent pas de substituants choisis dans l'ensemble comprenant les groupes aldéhyde, céto, époxy, isocyanate, anhydride d'acide carboxylique et aziridine, d'un ou plusieurs colloïdes protecteurs, éventuellement d'antiagglomérants, **caractérisées en ce que** sont contenus un ou plusieurs composés NR₃ ou R₂N-(CH₂)ₙ-NR₂, où n = 1 à 4, les radicaux R étant identiques ou différents et représentant un atome d'hydrogène, un radical alkyle en C₁-C₆ ou un radical hydroxyalkyle en C₁-C₆, au moins un radical R étant un radical hydroxyalkyle en C₁-C₆, ou sont contenus un ou plusieurs polyalkylèneglycols à groupe alkylène en C₁-C₆ et à une ou deux terminaisons NH₂, et les composés NR₃, R₂N-(CH₂)ₙ-NR₂ ainsi que les polyalkylèneglycols à terminaison NH₂ pouvant se trouver également sous forme de leurs sels.

2. Compositions de poudres de polymères redispersables dans l'eau selon la revendication 1, **caractérisées en ce que** les composés NR₃ contiennent un à trois restes éthanolamine ou isopropanolamine ainsi que des atomes d'hydrogène, des radicaux méthyle, éthyle et propyle,
les composés R₂N-(CH₂)ₙ-NR₂ contiennent un à quatre restes éthanolamine, propanolamine ou isopropanolamine ainsi que des atomes d'hydrogène, des radicaux méthyle, éthyle et propyle et n = 2 et
les polyalkylèneglycols terminés par NH₂ sont des polyéthylèneglycols (PEO) à une ou deux terminaisons amino, des polypropylèneglycols (PPO) à une ou deux terminaisons amino, ainsi que des copolymères EO-PO à une ou deux terminaisons amino.

3. Compositions de poudres de polymères redispersables dans l'eau selon la revendication 1 ou 2, **caractérisées en ce que** les composés accélérateurs de prise sont utilisés sous forme de leurs sels avec des acides organiques ou minéraux.

4. Compositions de poudres de polymères redispersables dans l'eau selon l'une quelconque des revendications 1 à 3, **caractérisées en ce que**, comme homopolymères ou copolymères on utilise des homopolymères d'acétate de vinyle, des copolymères d'acétate de vinyle et d'éthylène, des copolymères d'acétate de vinyle et d'éthylène et d'un ou plusieurs autres esters vinyliques, des copolymères d'acétate de vinyle et d'éthylène et d'ester d'acide acrylique, des copolymères d'acétate de vinyle et d'éthylène et de chlorure de vinyle, des copolymères styrène/ester d'acide acrylique, des copolymères styrène/1,3-butadiène.

5. Compositions de poudres de polymères redispersables dans l'eau selon l'une quelconque des revendications 1 à 4, **caractérisées en ce que** comme colloïde protecteur on utilise des poly(alcool vinylique)s partiellement saponifiés ou totalement saponifiés, éventuellement à modification hydrophobe, ayant un degré d'hydrolyse de 80 à 100 % en moles et présentant une viscosité Höppler, en solution aqueuse à 4 %, de 1 à 30 mPa.s (méthode selon Höppler à 20°C, DIN 53015).

6. Compositions de poudres de polymères redispersables dans l'eau selon l'une quelconque des revendications 1 à 5, **caractérisées en ce que** le composant accélérateur de prise est contenu en une quantité de 0,1 à 25 % en poids, par rapport au poids total de la composition de poudre.

7. Procédé pour la préparation de compositions de poudres de polymères redispersables dans l'eau selon l'une quelconque des revendications 1 à 6, **caractérisé en ce que** le composant accélérateur de prise est ajouté à la dispersion de polymère correspondante immédiatement avant le séchage par atomisation ou, sous forme de sel, est réduit en la poudre conjointement avec la dispersion de polymère, ou est ajouté sous forme de poudre après le séchage.

8. Utilisation des compositions de poudres de polymères redispersables dans l'eau, selon l'une quelconque des revendications 1 à 6, dans des produits chimiques pour le bâtiment, en association avec des liants à prise hydraulique tels que les ciments, le plâtre et le silicate de soude.

9. Utilisation des compositions de poudres de polymères redispersables dans l'eau, selon l'une quelconque des revendications 1 à 6, pour la préparation de colles pour le bâtiment, de colles pour carreaux et de colles pour l'isolation thermique pleine, d'enduits, de matières de rebouchage, de matières de rebouchage pour sols, de matières à étaler, de matières d'étanchéité, de mortiers pour joints et de peintures.

10. Utilisation des compositions de poudres de polymères redispersables dans l'eau, selon l'une quelconque des revendications 1 à 6, pour des mortiers projetés et des bétons projetés pour des ouvrages du bâtiment et des travaux publics ainsi que le revêtement de parois de tunnels.
